# EUROPEAN PATENT APPLICATION

(11) **EP 2 474 403 A1**
(43) Date of publication of application: **11.07.2012**
(21) Application number: 10811680.7
(22) Date of filing: 09.08.2010
(51) Int. Cl.: B29C 39/10, B29C 33/42, B29C 39/24, B29C 39/26, G02B 3/00, B29L 11/00

(54) **APPARATUS FOR PRODUCING WAFER LENS, DIE, AND PROCESS FOR PRODUCING WAFER LENS**

(30) Priority: 31.08.2009 JP 2009199976
(71) Applicant: Konica Minolta Opto, Inc., Hachioji-shi, Tokyo 192-8505 (JP)
(72) Inventor: FUJII Yuiti, Hachioji-shi Tokyo 192-8505 (JP); IWAIDA Kenichi, Hachioji-shi Tokyo 192-8505 (JP); TERAMOTO Tougo, Hachioji-shi Tokyo 192-8505 (JP); IMAI Toshiyuki, Hachioji-shi Tokyo 192-8505 (JP); SATO Akira, Hachioji-shi Tokyo 192-8505 (JP); HOSOE Shigeru, Hachioji-shi Tokyo 192-8505 (JP)
(74) Representative: Henkel, Breuer & Partner
(86) International application number: PCT/JP2010/063461
(87) International publication number: WO 2011/024630

(57) **Abstract**

A process for producing a wafer lens is disclosed in which a resin that has been cured is prevented from having projections or deficient parts. The process comprises a dispense step in which a resin is dropped onto a die that has a plurality of cavities arranged so as to leave spaces therebetween, an alignment step in which the position of the die relative to a glass substrate is adjusted, an imprint step in which one of the die and the glass substrate is pressed against the other, a curing step in which the resin is cured, and a separation step in which the glass substrate is separated from the die, the steps ranging from the dispense step to the separation step being repeated as one cycle to successively form resinous lens parts on the glass substrate, wherein in the alignment step in each cycle, the cavities of the die are disposed between the formed lens parts.

## Description

### TECBNICALFIELD

The present invention relates to apparatuses for manufacturing a wafer lens, molding dies, and methods for manufacturing a wafer lens.

### BACKGROUND ART

Conventionally, in the field of manufacturing an optical lens, there has been studied a technique in which a lens portion made of curable resin is provided on a glass substrate to obtain a high heat resistant optical lens (Patent Document 1, for example). As an example of a manufacturing method of an optical lens employing that technique, there is proposed a method in which a "wafer lens" in which a plurality of molded articles of curable resin are formed as lens portions on a wafer-shaped glass substrate is produced, and the glass substrate is then cut out into individual lens portions.

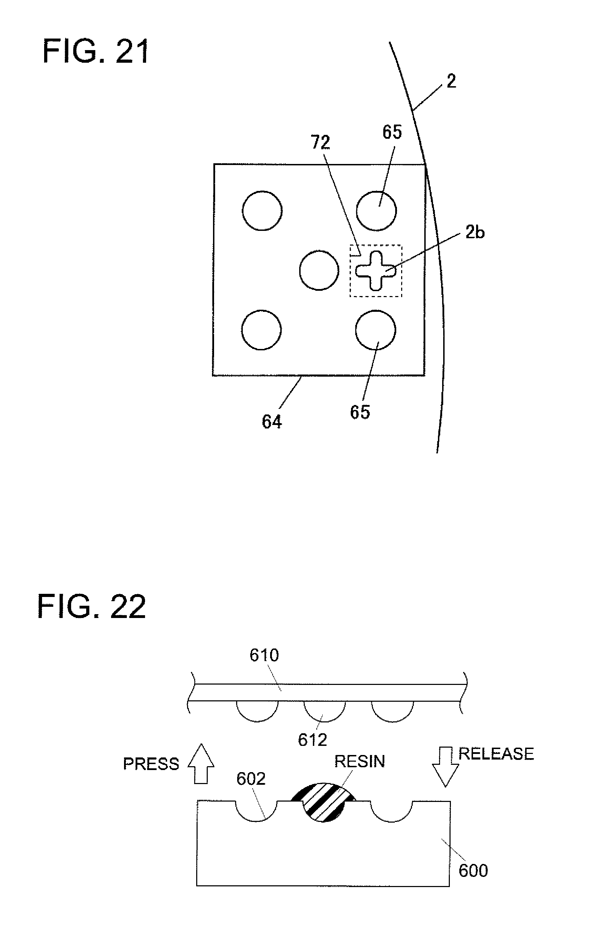

As an example of an apparatus for manufacturing a wafer lens, there is proposed a manufacturing apparatus which is provided with a molding die located at a predetermined position, a stage which can hold a glass substrate and is movable on an XY-plane with respect to the molding die and in which plastic lens portions are formed on the glass substrate. In the manufacturing apparatus, as shown in Fig. 22, the stage is moved to a predetermined position such that the glass substrate 610 is located to face the molding die 600 on which resin has been dispensed.

In the molding die 600, there are a plurality of cavities 602 formed After that, the molding die 600 is pressed against the glass substrate 610, the resin is cured, the glass substrate 610 is released, and thereby forming the plastic lens portions 612 on the glass substrate 610.

### RELATED ART DOCUMENT

### PATENT DOCUMENT

[Patent Document 1] Japanese Patent No. 3926380

### SUMMARY OF THE INVENTION

### OBJECT OF THE INVENTION

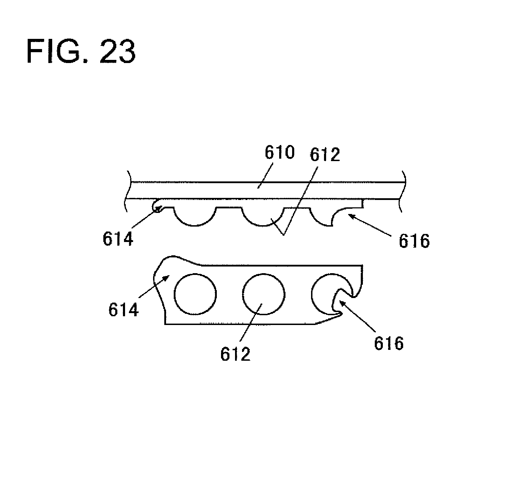

In such a wafer lens manufacturing apparatus, it is ideal that the resin is evenly spread out and filled in each cavity of the molding die in just proportion when the molding die is pressed against the glass substrate. However, the amount of the filled resin in the cavities is sometimes too much or too little if the viscosity of the resin dispensed on the molding die 600 depends on positions or the pressure of the molding die against the resin depends on the positions of the resin. In addition, if the adjacent lens portions made of curable resin are integrally molded to be in contact with each other, sink marks (referred to as a situation that a part of the resin is drawn by another part of the resin) are generated when the resin is cured. When this has happened, as shown in Figs. 23a and 23b, the projection portion 614 may be created or the unfilled section 616 may be created in the resin having been cured.

In view of the above, a main object of the present invention is to provide an apparatus for manufacturing a wafer lens, a molding die, and a method for manufacturing a wafer lens, which can prevent projection portions or unfilled sections from being created in the resin having been cured.

### MEANS FOR SOLVING THE OBJECT

To solve the above object, according to one aspect of the present invention, provided is an apparatus for manufacturing a wafer lens in which plastic lens portions are formed on a glass substrate, the apparatus comprising,
a stage configured to move two-dimensionally while holding the glass substrate;
a molding die having a plurality of cavities;
a moving mechanism configured to move the stage upward and downward toward the glass substrate held on the stage;
a controller c:onfigi.ued to control the stage and the moving mechanism;
wherein lenses are formed by the following steps:
   performing the following steps as one cycle at a first position, of the molding die, on the glass substrate:
      dispensing resin in the plurality of cavities of the molding die or on the glass substrate;
      pressing one of the molding die and the glass substrate against the other,
      curing the resin; and
      releasing the molding die from the cured resin, and
      moving, after the step of releasing, one of the glass substrate and the molding die with respect to the other; and
      performing the cycle at a second position,
      wherein the relation p/s ≥ 2 is satisfied, where a cavity pitch of the cavities of the molding die in the traveling direction is p mm, and a traveling pitch from the first position to the second position is s mm.

In addition, according to a second aspect of the present invention, provided is a molding die comprising:
molding portions configured to form, on a glass substrate, plastic lens portions or plastic negative shapes of lens portion;
wherein at a first position on the glass substrate the lens portions or the negative shapes of lens portion are formed by the molding portions, and then at a second position on the glass substrate the molding die is used to form the lens portions or the negative shapes of lens portion,
wherein the molding portions are formed at a pitch which satisfies the relation pls ≥^{_} 2, where the pitch between the molding portions of the molding die is p mm and a pitch between the first position and the second position is s mm.

In addition, according to a third aspect of the present invention, provided is a method for manufacturing a wafer lens, the method comprising:
a dispense step for dispensing resin on a molding die in which a plurality of cavities are provided in a thinned state;
an alignment step for adjusting a position between the molding die and a glass substrate;
an imprint step for pressing one of the molding die and the glass substrate against the other_{;}
a curing step for curing the resin; and
a release step for releasing the glass substrate from the molding die,
wherein the process from the dispense step to the release step is repeated as one cycle to sequentially from plastic lens portions on the glass substrate, and in the alignment step in each cycle the cavities of the molding die are placed between the lens portions having been formed.

### ADVANTAGE OF THE INVENTION

According to the present invention, arrangement is performed in a thinned manner such that the cavity pitch p mm of the molding die satisfies the relation p/s ≥ 2 in terms of the traveling pitch s mm of the molding die with respect to the glass substrate, and the cavities are positioned between the lens portions having been formed; thus, the lens portions are formed on the glass substrate in a thinned state, and new lens portions will be formed in those thinned regions. Thus, when resin is dispensed in each cavity, the resin is filled in each cavity in just proportion, and the lens portions are separately formed, thereby preventing the generation of sink marks. As a result, generation of projection portions or unfilled sections are prevented in the resin having been cured.

### BRIEF DESCRIPTION OF THE DRAWINGS

Fig. 1 is a plan view showing a schematic configuration of a wafer lens;
Fig. 2 is a diagram showing a schematic configuration of the wafer lens, and is a cross section along the D-D line of Fig. 1;
Fig. 3 is a perspective view showing a schematic configuration of an apparatus for manufacturing a wafer lens according to a preferred embodiment of the present invention;
Fig. 4 is a plan view of the apparatus for manufacturing a wafer lens of Fig. 3;
Fig. 5 is a diagram showing a schematic configuration of an X-axis moving mechanism used in the preferred embodiment of the present invention and is a cross section along the A-A line of Fig. 4;
Fig. 6 is a diagram showing a schematic configuration of a Y-axis movement mechanism used in the preferred embodiment of the present invention and is a cross section along the B-B line of Fig. 4;
Fig. 7 is a cross section showing a schematic configuration of an XY stage and the inside of a surface plate used in the preferred embodiment of the present invention;
Figs. 8a and 8b are cross sections along the C-C line of Fig. 7;
Fig. 9 is a cross section showing a schematic configuration of a molding die portion used in the preferred embodiment of the present invention;
Fig. 10 is a plan view showing a schematic configuration of Fig. 9;
Fig.11 is a cross section showing a schematic configuration when the dispenser is placed to face the molding die in the preferred embodiment of the present invention;
Fig. 12 is a block diagram illustrating a schematic control configuration used in the preferred embodiment of the present invention;
Fig.13 is a schematic flow chart temporally illustrating the method for manufacturing a wafer lens of the preferred embodiment of the present invention;
Fig. 14 is a timing chart schematically showing the state of pressure from a dispense step to a release step of Fig. 13;
Fig. 15 is a diagram schematically illustrating a configuration for adjusting the parallelism between the glass substrate and the molding die of the present embodiment;
Fig. 16 is a diagram schematically illustrating a coordinate axis conversion on a two-dimensional plane of the molding die of the present embodiment;
Fig. 17 is a diagram showing a schematic configuration of the molding die and is a cross section along the E-E line of Fig. 10;
Fig. 18 is a cross section schematically illustrating the relative movement of the molding die;
Fig.19 is a plan view schematically illustrating the formation of the lens portions;
Fig. 20 is a plan view schematically illustrating how to deal the case that the molding die faces the circumference of the glass substrate;
Fig. 21 is a plan view schematically illustrating how to deal the case that the glass substrate is provided with an identifier;
Fig. 22 is a schematic diagram illustrating the conventional art;
Fig. 23a is a schematic cross section illustrating the problem of the conventional art; and
Fig. 23b is a schematic plan view illustrating the problem of the conventional art.

### BEST MODE FOR CARRYING OUT THE INVENTION

A preferred embodiment of the present invention is described below with reference to the drawings.

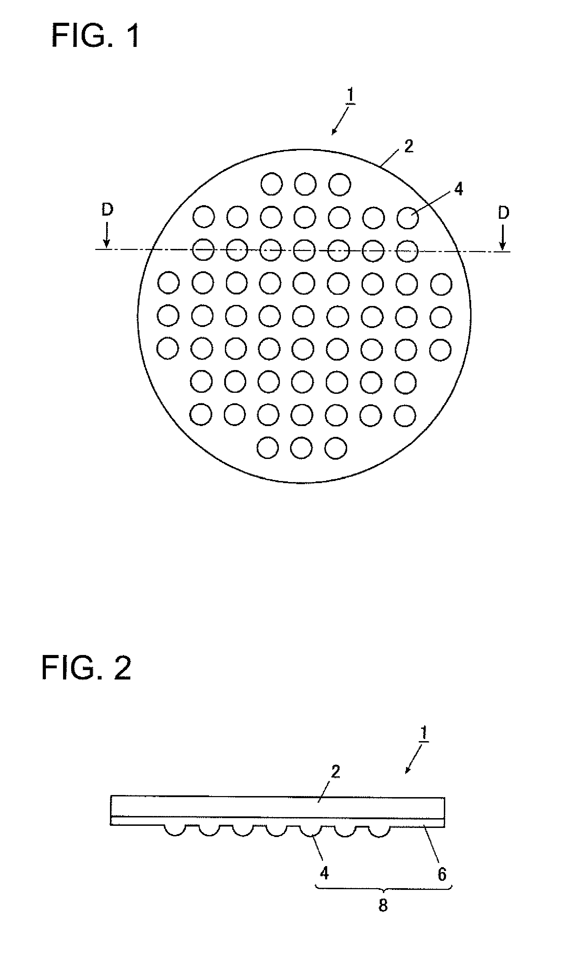

As shown in Fig. 1 and Fig. 2, a wafer lens 1 is a circular shaped glass substrate 2 and has a plurality of convex lens portion 4. The glass substrate 2 is an example of a substrate.

On the surface of the glass substrate 2, there are a plurality of convex lenses portions 4 arranged in an array. The convex lens portions 4 have a microstructure such as diffraction grooves or steps on the optical surface. On the glass substrate 2, there may be formed concave lens portions instead of the convex lens portions 4.

In the surrounding area of the convex lens portions 4, there is a non-lens portion 6 formed. The convex lens portions 4 and the non-lens portion 6 are integrally forked of resin, and the convex lens portions 4 and the non-lens portion 6 constitute a resin portion 8. In this embodiment the convex lens portions 4 are sequentially formed on the single glass substrate 2 in increments of a molding die, and the glass substrate 2 is finally cut out into individual convex lens portions 4.

The resin portion 8 is formed of light-curable resin. As the light-cl.I!1ible resin, there can be used acrylic resin and allyl ester resin, and these resins can be reacted and cured by radical polymerization.

Next, a wafer lens manufacturing apparatus 10 used for manufacturing a wafer lens 1 is described.

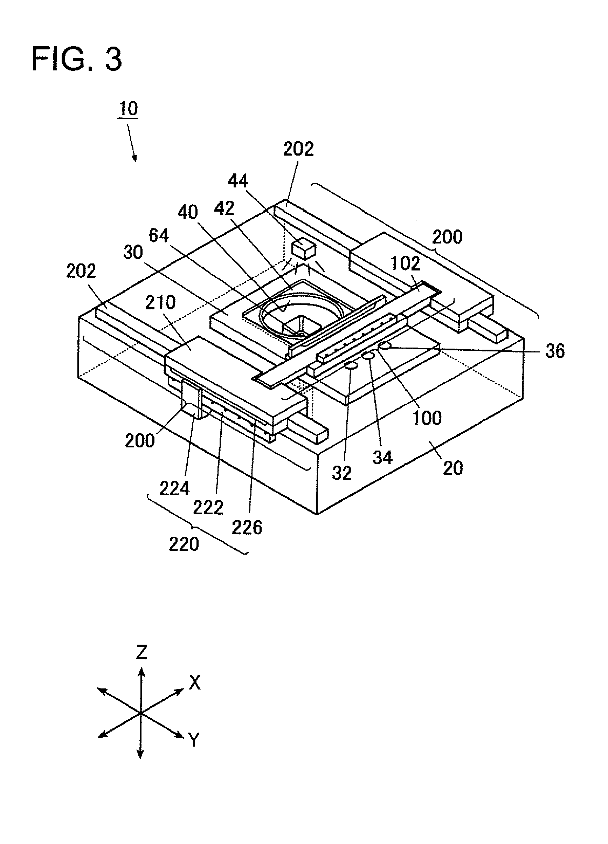

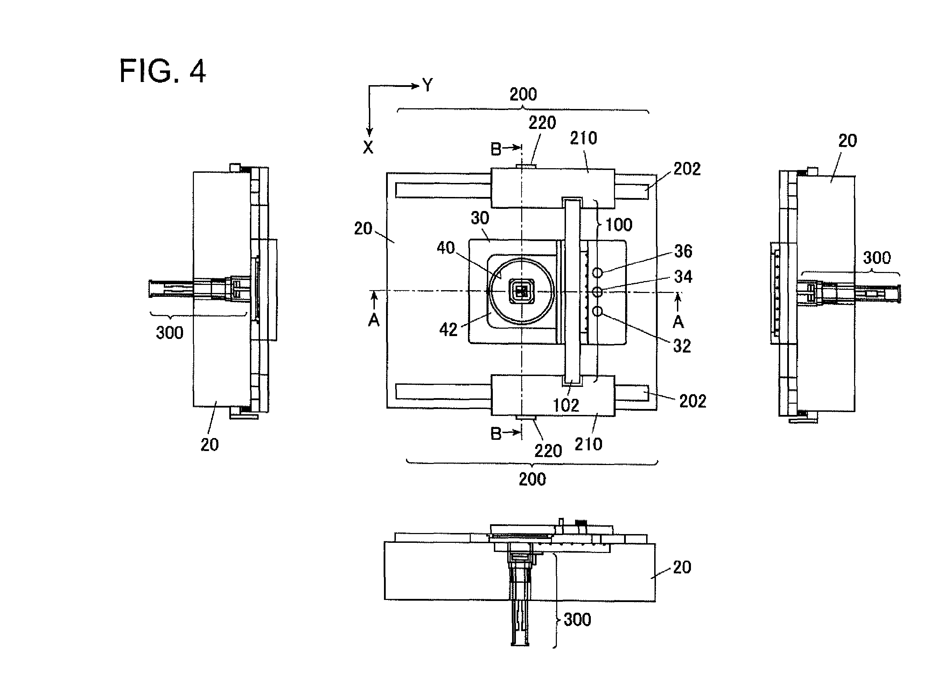

As shown in Fig. 3 and Fig. 4, the wafer lens manufacturing apparatus 10 is provided mostly with an XY stage 30 disposed on a surface plate 20 having a rectangular solid shape, an X-axis movement mechanism 100 configured to move the XY stage 30 along an X-axis direction, and a pair of Y-axis movement mechanisms 200 configured to move the XY stage 30 along a Y-axis direction.

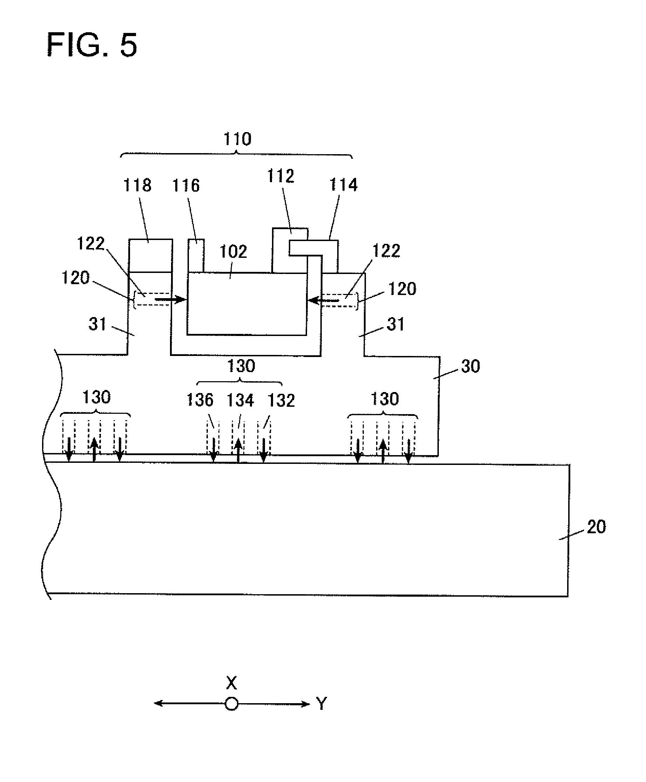

As shown in Fig. 4 and Fig. 5, the X-axis movement mechanism 100 has an X-axis guide 102 extending in the X-axis direction. As shown in Fig. 5, the XY stage 30 is disposed under the X-axis guide 102. On the XY stage 30, there is a pair of elongated projections 31 formed to extend in the X-axis direction, and the X-axis guide 102 is disposed between the elongated projections 31.

As shown in Fig 5, the X-axis movement mechanism 100 has a linear motor 110 which actually moves the XY stage 30 along the X-axis direction. The linear motor 110 has a known mechanism constituted mostly by a stator 112, a rotor 114, a scale 116, and a sensor 118.

The stator 112 is secured on the X-axis guide 102. The rotor 114 is fixed on one of the elongated projections 31 on the XY stage 30 and is movable along the X-axis guide 102. The scale 116 is fixed on the X-axis guide 102. The sensor 118 is fixed on the other elongated projection 31 on the XY stage 30.

Regarding the X-axis movement mechanism 100, the rotor 114 moves along the stator 112 while detecting the scale 116 with the sensor 118, and this movement causes the XY stage 30 to move along the X-axis guide 102 in the X-axis direction by a predetermined distance.

On each of the elongated projection 31 on the XY stage 30, there is provided an air slide guide mechanisms 120. The air slide guide mechanisms 120 have blowhole 122 to blow air. The air slide guide mechanisms 120 operate such that the mechanisms blows air through the blowholes 122 against the Y-axis guide 102 to cause the XY stage 30 to slide along the X-axis guide 102.

Under the XY stage 30, there are provided a plurality of air slide guide mechanisms 130. Each air slide guide mechanism 130 has two blowholes 132 and 136 for blowing air and one vacuum hole 134 for drawling air. The air slide guide mechanism 130 operates such that the mechanism blows air through the blowholes 132 and 136 against the surface plate 20 and draws air through the vacuum hole 134 to levitate the XY stage 30 above the surface plate 20 at a predetermined height

As shown in Fig. 3 and Fig. 4, the Y-axis movement mechanism 200 has a pair of Y-axis guides 202 extending in the Y-axis direction. On the Y-axis guide 202, there are provided a pair of Y-axis movable bodies 210.

On the Y-axis movable bodies 210 both, ends of the X-axis guide 102 are fixed and are movable in the Y-axis direction along the Y-axis guides 202 while holding the X-axis guide 102 (XY stage 30).

In detail, on the Y-axis movement mechanism 200 are provided linear motors 220. The linear motor 220 is configured, similarly to the configuration of the linear motor 110 of the X-axis movement mechanism 100, mostly by a stator 222, a rotor 224, a scale 226, and a sensor (not shown in the figure), and the rotor 224 moves along the stator 222 while the sensor is detecting the scale 226, and this movement causes the Y-axis movable body 210 to move along the Y-axis guide 202 in the Y-axis direction by a predetermined distance.

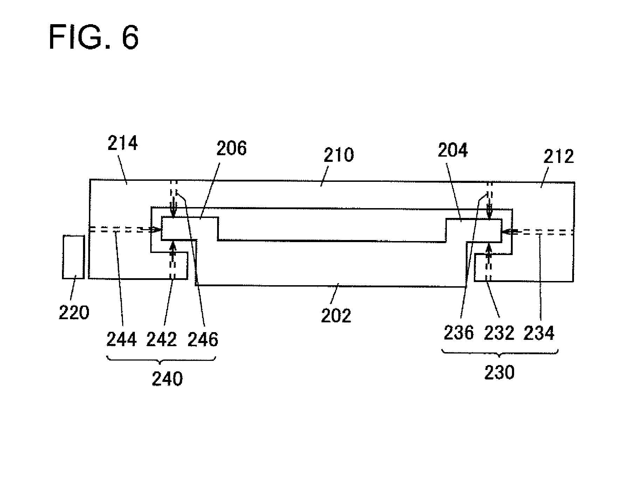

As shown in Fig. 6, on the end portions of the Y-axis movable body 210 there are hook-shaped hook portions 212, 214 formed, and end portions 204 and 206 of the Y-axis guides 202 are snugly buried inside the hook portions 212 and 214.

The hook portion 212 is provided with an air slide guide mechanism 230, and the hook portion 214 is provided with an air slide guide mechanism 240.
The air slide guide mechanism 230 has blowholes 232, 234, and 236 to blow air in three directions (upwxd,sidevvard, and downward). The air slide guide mechanism 240 also has blowholes 242, 244., and 246 to blow air in three directions (upward, sideward, and downward).

The air slide guide mechanism 230 blows air through the blowholes 232, 234, and 236 against the end portion 204 of the Y-axis guide 202, and the air slide guide mechanism 240 also blows air through the blowholes 242, 244, and 246 against the end portion of the 206 of the Y-axis guide 202, whereby the Y-axis movable body 210 is caused to slide by air.

As shown in Fig. 3 and Fig. 4, on the XY stage 30, there are provided a dispenser 32 for dispensing resin on the glass substrate 2, a laser end-measuring device 34 for measuring flatness (inclination) and a height of a molding die 64, and a microscope 36 used to align the molding die 64 with the glass substrate 2. In addition, in order to measure the Harness (inclination) of the molding die 64, an autocollimator may be used instead of the laser end-measuring device 34.

As shown in Fig. 3, in the XY stage 3 0 there is a through-hole 40, which is circular in plan view, formed through the upper and lower surfaces, and the glass substrate 2 is held over the through-hole 40.

In detail, the through-hole 40 has a step formed therein, and the glass substrate 2 is secured on the step with a not shown spring. On the XY stage 30, there is a lid portion 42, which is rectangular in plan view, formed to cover the through-hole 40. The lid portion 42 is made up of a light-transnûssive member, and over the lid portion 42 is provided a light source 44.

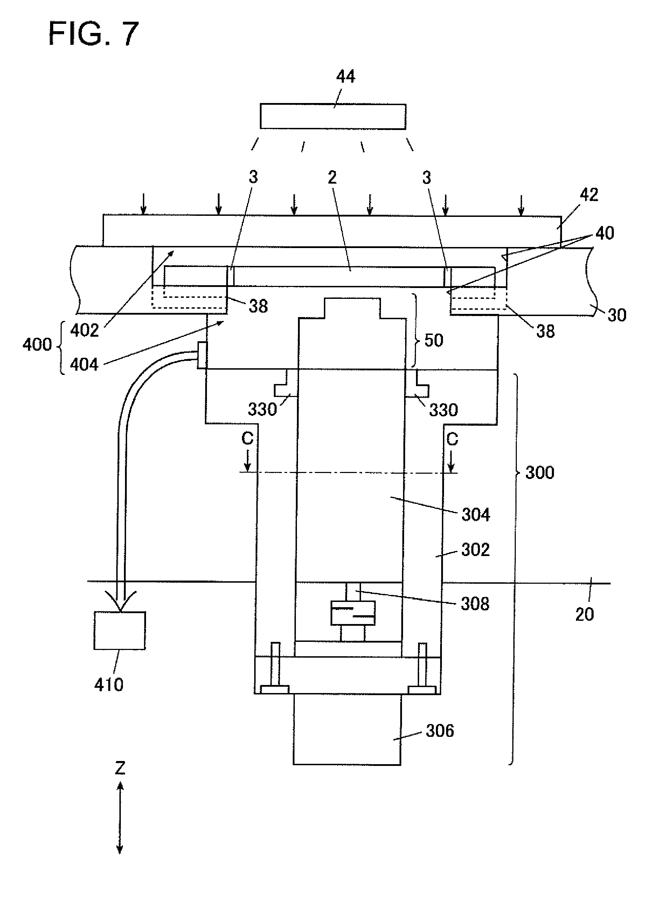

As shown in Fig. 7, in the surface plate 20, there are buried a molding die portion 50 for forming the convex lens portions 4 of the wafer lens and a Z-axis movement mechanism 300 for moving up and down the molding die portion 50 along the Z-axis direction. The molding die portion 50 is disposed on the upper portion of the Taxis movement mechanism 300 (Z stage 304).

The Z-axis movement mechanism 300 is constituted mostly by a hollow-square-pillar-shaped Z-axzs guide 302 having a flange on the upper portion thereof, a Z stage 304 configured to move through Z-axis guide 302 in the Z-axis direction, and a motor 306 to move the Z stage 304 in the Z-axis direction (up and down direction).

The motor 306 has a potentiometer therein, and a shaft 308 is connected to the motor. In the Z-axis movement mechanism 300, the operation of the motor 306 causes the shaft 308 to extend and contract in the up and down direction, and this emotion causes the Z stage 304 and the molding die portion 50 to move in the up and down direction.

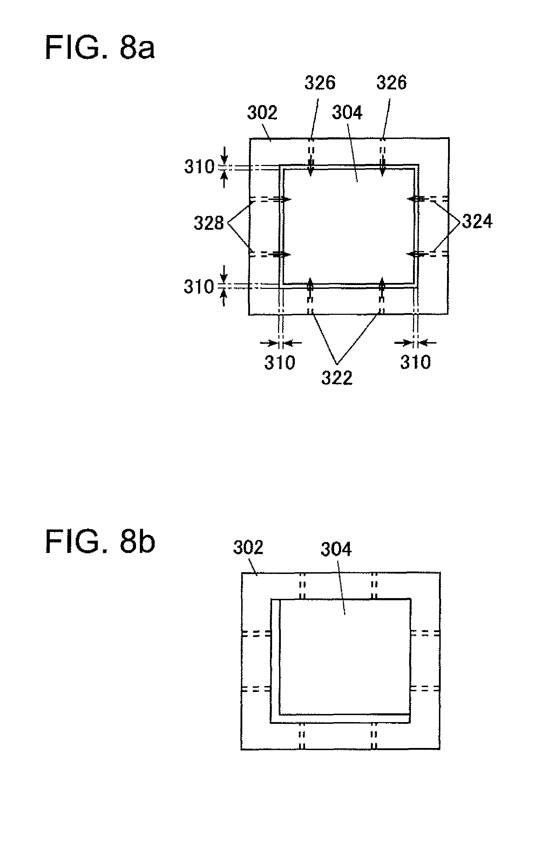

As shown in Fig. 8a, between the inner circumferential surface of the Z"axis guide 302 and the side surface of the Z stage 304 is provided a gap 310.

On the Z-axis guide 302 is an air slide guide mechanism 320. The air slide guide mechanism 320 has blowholes 322, 324, 326, and 328 for blowing air. The air slide guide mechanism 320 operates such that the mechanism blows air through the blowholes 322,324,326, and 328 against the Z stage 304 to cause the Z stage 304 to slide by air.

In addition, as shown in Fig. 7, on the inner circumferential surface, ofthe Z-axis guide 302, forming the flange, sealing is performed using a sealing member 330 made of silicone grease, an oil seal, an O-ring, or the like, and the space between the Z-axis guide 302 and the Z stage 304 is sealed in order not to let the air in the gap 310 leak (escape) into the upper portion of the Z axis guide 302.

In addition, although not shown in the drawing, in order to obtain the above-mentioned advantage, it is preferable that a flange portion is provided on the circumference of the Z stage 3Il4 configured to move up and down and the space between this flange and the flange portion of the fixedly disposed Z-axis guide 302 is covered with a metal bellows to seal in the similar way.

As shown in Fig. 7, there is a space portion 400 formed in the region surrounded by the lid portion 42, the XY stage 30, the surface plate 20, and the Z-axis guide 302. The space portion 400 is separated by the glass substrate 2 disposed on the XY stage 30 into an upper space portion 402 defined by the lid portion 42 and the substrate and into a lower space portion 404 defined by the Z-axis movement mechanism 300 and the substrate.

In this configuration, there are communication holes 3 formed in the circumferential portion of the glass substrate 2 to pass through the upper and lower surfaces, communicate the upper space portion 402 and the lower space portion 404, and thereby eliminating the pressure difference between the space portions 402 and 404. The lower space portion 404 is connected to the decompression mechanism 410 such as a vacuum pump, and the decompression mechanism 410 operates to decompress the space portion 400.

Alternatively, instead of the communication hole 3 formed in the glass substrate, there may be communication holes 3 8 in the XY stage 30, as shown in Fig. 7.

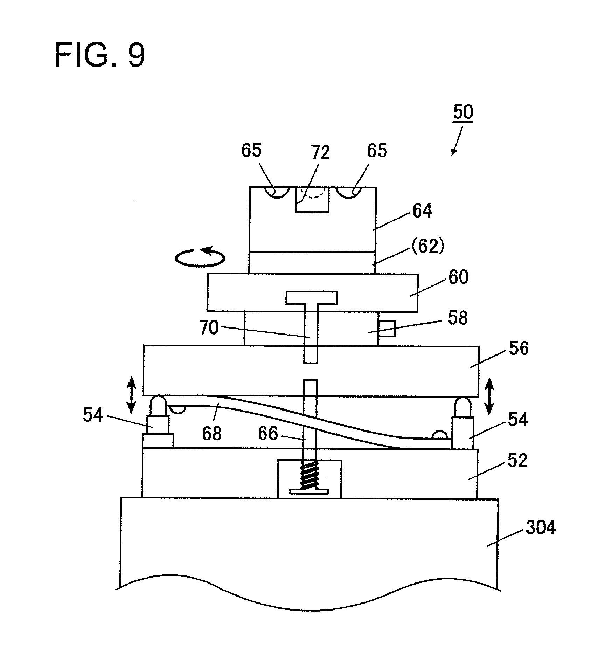

As shown in Fig. 9, the molding die portion 50 is provided mostly with a first support platform 52 disposed on the Z stage 304, piezoelectric actuators 54, a second support platform 56, a pressure sensor 58, a third support platform 60, and a molding die 64.

The first support platform 52 and the second support platform 56 are connected to each other and biased to come close by a screw 66 for precompression. Between the first support platform 52 and the second support platform 56, there are three piezoelectric actuators 54 and an L-shaped leaf spring 68 (see Fit. 10). The second support platform 56 and the third support platform 60 are connected with a screw 70, and between the second support platform 56 and the third support platform 60, the pressure sensor 58 is disposed.

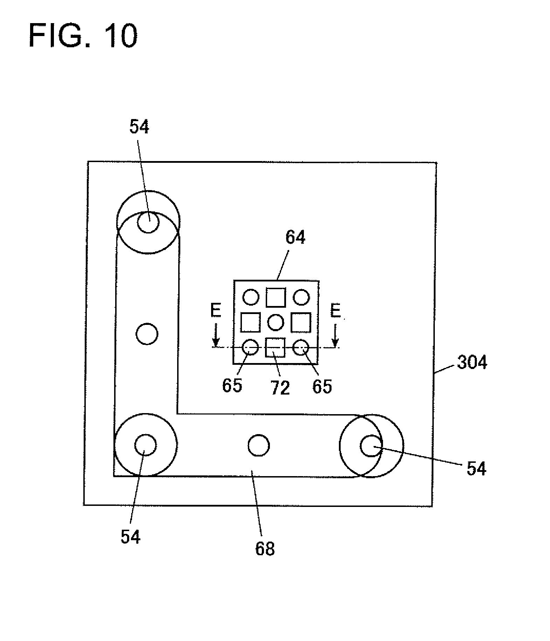

As shown in Fig. 10, the three piezoelectric actuators 54 are each disposed at the three corners on the first support platforms 52 to support the second support platform 56 at three positions. In the molding die portion 50, the operation of the piezoelectric actuators 54 are controlled based on the output value of the pressure sensor 58 so that the inclinations of the second support platform 56, the first support platform 60, and the molding die 64 are adjusted. As a result, the molding die 64 and the glass substrate 2 can be made to be parallel, and mold clamping and imprint forming can be performed while controlling the road on the resin dispensed on the molding die 64, to a predetermined pressure.

In addition, although this embodiment is configured using the three piezoelectric actuators 54, the number is not restricted to three if the number and the arrangement are suitable for tilting to adjust parallelism and for controlling the road.

In the molding die 64, there are a plurality of cavities 65 (depressed portions, here) formed. The surface (molding surface) of the cavities 65 is a negative shape corresponding to the convex lens portions 4 of the wafer lens 1, and the cavities 65 are molding portions. The molding die 64 may be a metal die or a plastic die, and its surface is processed by a watcr-repeflent treatment.

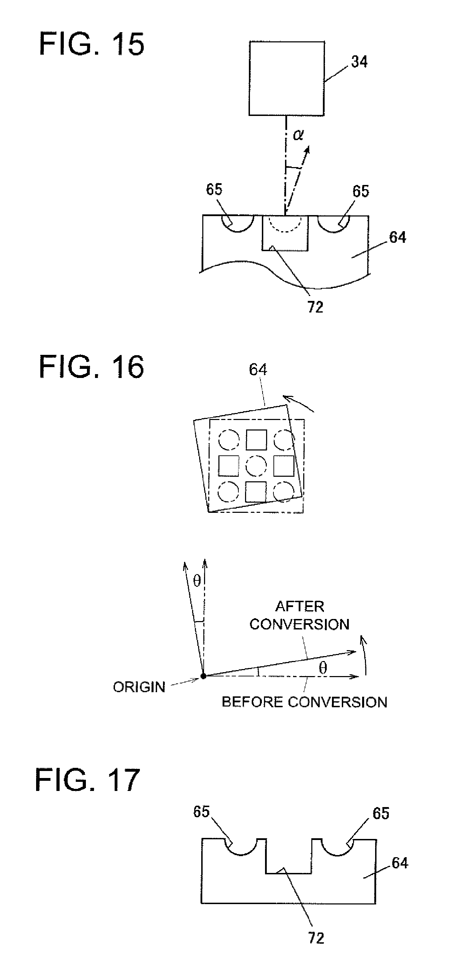

In particular, when the molding die 64 is viewed from above, the cavities 65 are arranged in a zigzag alignment, as shown in Fig. 10. To put it in other words, the adjacent cavities 65 have such a space between them that one cavity 65 could be provided there, and the cavities 65 are provided in a thinned state. In addition, as shown in Fig. 17, between the adjacent cavities 65, there are depressed portions 72 formed. The depressed portion 72 is deep enough for the cavities 65 to be buried therein.

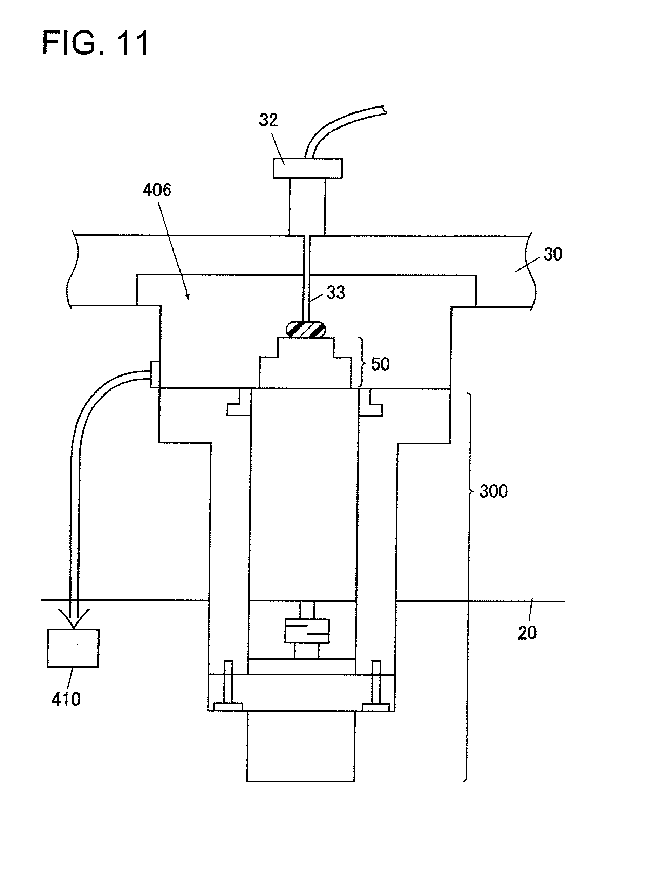

As shown in Fig.11, the dispenser 32 has a needle portion 33 for dispensing resin and is extending through the XY stage 30. In the state that the dispenser 32 on the XY stage 30 and the molding die portion 50 are faced to each other, the space portion 406 is farmed in a region surrounded by the XY stage 30, the surface plate 20, and the Taxis movement mechanism 300, and the apex af the needle portion 33 of the dispenser 32 is located in the space portion 406. In this state, the space portion 406 is decompressed by the operation ofthe decompression mechanism 410.

Since the other components in Fig. 11 are the same as those in Fig. 7, and the like components are given like symbols and the descriptions thereof are omitted.

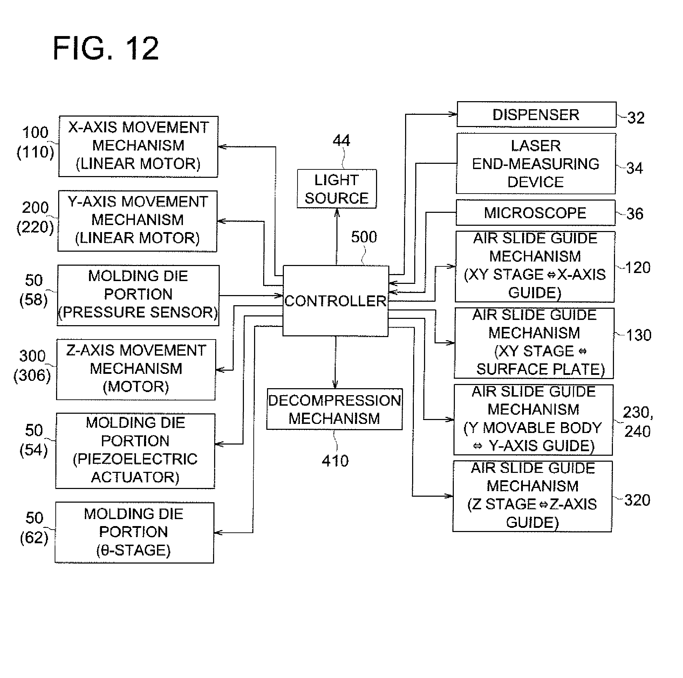

The wafer lens manufacturing apparatus 10 having the above-mentioned configuration is provided with a controller 500. Fig. 12 is a block diagram illustrating a schematic control configuration used in the preferred embodiment of the present invention. To the controller 500, connected are the dispenser 32, the laser end-measuring device 34, the microscope 36, the light source 44, the molding die portion 50 (the piezoelectric actuator 54, the pressure sensor 58, a 0-stage 62, and the like), the X-axis movement mechanism 100, the Y-axis movement mechanism 200, the Z-axis movement mechanism 300, the air slide guide mechanism 120,130,230, and 240, and 320, a decompression mechanism 410, and the controller 500 is made to receive the results of detection of these components and to control the operation (start, stop, or the like) of these components.

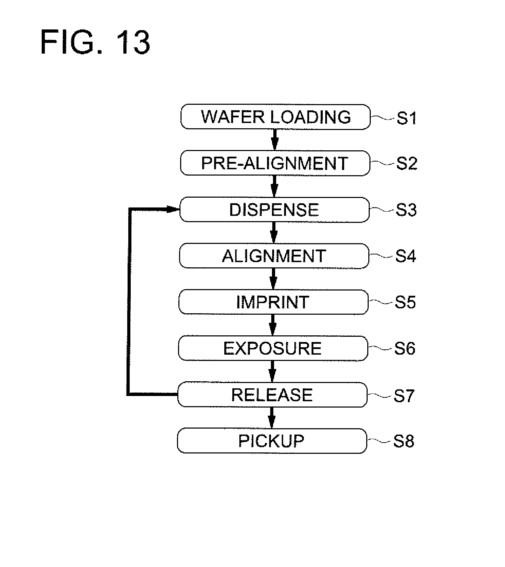

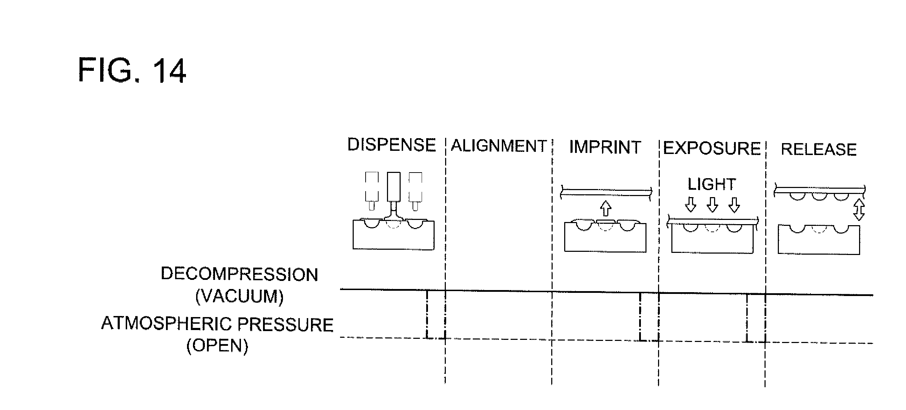

Next, with reference to Fig_ 13 and Fig. 14, the method for manufacturing the wafer lens 1 by using the above-described wafer lens manufacturing apparatus 10 is described

First, the glass substrate 2 is placed on the XY stage (wafer loading step S1), and the through-hole 40 of the XY stage 30 is covered with the lid portion 42 (see Fig. 7).

After that, the X-axis movement mechanism 100 (linear motor 110), the Y-axis movement mechanism 200(linear motor 220), the air slide guide mechanisms 120, 130, 230, and 240, and the like are operated to slide by air the XY stage 30 in the X-axis direction and the Y-axis direction to perform alignment, and the dispenser 32 is located over the molding die 64 (pre-aligoment step S2).

In this case, the alignment mark is previously provided on the surface plate 20 at a predetermined position, and in the pre-alignment step the alignment of the dispenser 32 is performed while the alignment mark is observed in the microscope 36.

After the dispenser 32 has been aligned, the operation of the air slide guide mechanism 120, 130, 230, and 240 is interrupted, and the XY stage 30 is locked at the position with the XY stage 30 and the surface plate 20 being in close contact to each other.

In this state, a predetermined amount of resin is dispensed (see Fig. 11, dispense step S3) through the needle portion 33 ofthe dispenser 32 into the cavities 65 of the molding die 64.

In this step, as shown by the solid line portion in Fig.14, the space portion 406 has been decompressed by controlling the decompression mechanism 410. The "decompression" basically means to be in a vacuum state, and in detail the pressure is reduced to an extent that bubble are not generated in the resin in the dispenser 32 and the bubbles enclosed in the resin frog the air can be removed. For example, when epoxy-based resin is used as the resin dispensed from the dispenser 32, bubbles are prevented from arising in the resin to be dispensed if the space portion 406 is at 2000 Pa or higher.

By performing the process of the dispense step S3 in such a decompressed state, bubbles are prevented from being enclosed in the resin.

In addition, in this embodiment, the dispense step S3 through the release step S7 are basically performed in the decompressed state, and the definition of the decompression is the same as the above description.

After that, the air slide guide mechanism 120, 30, 230, and 240 are operated to slide by air the XY stage 30 in the X-axis direction and the Y-axis direction to perform alignment so that the previously placed glass substrate 2 is located above the molding die portion 50 (alignment step S4, see Fig. 7).

Then, (1) as shown in Fig. 15, the laser end-measuring device 34 is placed directly above the molding die 64, the operation of the air slide guide mechanism 120,130,230, and 240 is interrupted, and the glass substrate 2 is locked at the position with the XY stage 30 and the surface plate 20 brought in close contact with each other.

At the same time as the above step, the motor 306 and the air slide guide mechanism 320 are controlled to blow air through the blowholes 322, 324, 326, and 328 to place the Z stage 304 at the predetermined height position, then as shown in Fig. 8b air is blown only through the blowholes 322 and 328, for example, so that the Z stage 304 is partly brought in contact with the inner wall of the Z-axis guide 302. This contact enables the position of the molding die portion 50 to be locked (positioned) and the molding die portion 50 to be held at a predetermined position with a friction force between the Z stage 304 and the Z-axis guide 302.

(2) After that, the heights at three positions or more are measured with the laser end-measuring device 34, and based on the results the inclination of the upper surface of the molding die 64 and the height position of the molding die 64 are calculated, and based on the output value of angle (deviation of the angle at, the piezoelectric actuators 54 are controlled to set the lower surface of the glass substrate 2 and the upper surface of the molding die 64 to be parallel.

After that, the locked state is released, and the microscope 36 is located directly above the molding die 64. The operation of the air slide guide mechanisms 120, 130, 230, and 240 is interrupted to lock the glass substrate 2 at the position with the XY stage 30 and the surface plate 20 brought in close contact with each other.

At the same time, the air slide guide mechanism 320 is controlled, as shown in Fig. 8b, to blow air only through the blowholes 322 and 328, for example, so that the Z stage 304 is partly brought in contact with the inner wall of the Z-axis guide 302, This contact locks (positions) the position of the molding die portion 50, and the molding die portion 50 is held at a predetermined position by a friction force between the Z stage 304 and the Zap guide 302.

In this manner, by bringing the Z-axis guide 302 and the Z stage 304 in contact with each other, it is possible for the molding die 64 mounted on them to be surely held at a predetermined position and angle with respect to the 2-alcis stage 304. As a result there are advantages: when not locked, the Z stage 304 and the molding die 64 are smoothly moved; and when locked, it is possible to repeatedly perform the molding operation in the same orientation as it was adjusted.

(3) After that, the molding die 64 is detected with the microscope 36, and based on the detection result the actual locating position of the molding die 64 is obtained, and the axial coordinate of the initial position of the molding die 64, which is previously set as an initial axial coordinate, is converted to meet the actual locating position in the controller 500.

In detail, at least two positions are identified with the microscope 36 from above the molding die 64, and one of the positions is identified as an origin and the other is identified as a correction point For example, alignment marks are previously provided on the molding die 64 at orthogonal positions, and one alignment mark is identified as the origin and the other alignment mark is identified as the correction point

fn addition, in this embodiment the microscope 36 is used as an example of the position detector for detecting the locating position of the molding die 64.

After that, the line which is for converting the coordinate and extends from the origin to the correction point is calculated, then, the difference (difference in the angle α) between that calculated line and the previously set axial coordinate is calculated, and the axial coordinate is converted based on the difference. To put it in other words, the locating positions on the plane of the molding die 64 are previously set as the axial coordinate, then, the difference between the set axial coordinate and the line for coordinate conversion identified with the microscope 36 and calculated is obtained, and as shown in Fig. 16, based on the difference, the previously set axial coordinate (see the broken line) is converted on the axial coordinate (see the solid line) calculated by the controller 500. This conversion can fix the relative two-dimensional positional relation between the molding die 64 and the glass substrate 2, and the glass substrate 2 can be moved precisely with respect to the molding die 64.

Alternatively, in the molding die portion 50, a 0-stage 62 (see Fig. 9) may be provided to rotate the molding die 64, and instead of the above conversion of the axial coordinate in the controller 500, the θ-stage 62 may be controlled to rotationally move the molding die 64 to meet the previously set coordinate axes (to restore the deviated axial coordinate).

In this state, the molding die portion 50 is controlled in position to lift the molding die 64 up to a predetermined position with respect to the glass substrate 2, and the molding die 64 is held at the predetermined position (imprint step S5).

In detail, the Z-axis movement mechanism (motor 306) is operated to extend the shaft 308 upwardly to move the Z stage 304 upward.

In this case, the motor 306 is controlled based on the output value of the potentiometer enclosed in the motor 306 to move the Z stage 304 to a predetermined height. As a result, the resin is pressed by the glass substrate 2 and is gradually spread to fill in the cavities 65 of the molding die 64.

Also in the imprint step S5, the decompression mechanism 410 is controlled to keep the space portion 400 in the decompressed state.

With the resin being pressed by the glass substrate 2 in the decompressed state, bubbles are prevented from being enclosed in the resin. In addition, since the space portion 400 is in the decompressed state, no pressure difference is created between the upper space portion 402 and the lower space portion 404, thereby preventing warp or deformation of the glass substrate 2.

After that, the light source 44 is controlled to apply light to the resin to cure the resin with the Z stage 304 held at the set position (exposure step S6).

In this step, since the decompression mechanism 410 is controlled to keep the space portion 400 in the decompressed state, the oxygen inhibition to the resin is prevented, thereby surly curing the resin. In addition, if it is opened to the atmospheric pressure and purged with nitrogen after the mold clamping and during molding, the resin is cured well in the case that the resin is ultraviolet curable resin which is of radical reaction type and has curing inhabiting effect especially to oxygen.

In addition, if the Z stage 304 is kept at a predetermined height when the resin is cured (at the time of resin getting cured or after that) and shrinkage during curing is generated, the glass substrate 2 does not absorb the shrinkage and may result in distortion in the resin and insufficient imprint of the surface shape of the cavity 65 onto the resin.

In order to address this problem, after keeping the light source 44 on for a predetermined period to apply a predetermined amount of light to the resin, the molding die portion 50 may be pressure-controlled to keep the pressure of the molding die 64 against the glass substrate 2 at a predetermined pressure.

In detail, the piezoelectric actuators 54 are operated to move the molding die 64 upward based on the output value of the pressure sensor 58.

After that, the light source 44 is put off to interrupt the application of light to the resin. After the interruption of light, the motor 306 is operated to contract the shaft 308 downward to move the Z stage 304 downward By this operation, the resin having been cured is released from the molding die 64 together with the glass substrate 2 (release step S7).

In this step, since the decompression mechanism 410 is controlled to keep the space portion 400 in the decompressed state, the releasing is easy with no atmospheric pressure applied. As a result, number of convex lens portions 4 corresponding to the number of the cavities 65 of the molding die 64 are formed on the glass substrate 2.

After that, the process from the dispense step S3 to the release step S7 will be repeated as one cycle for a predetermined times to sequentially form a plurality of convex lens portions 4 on the glass substrate 2.

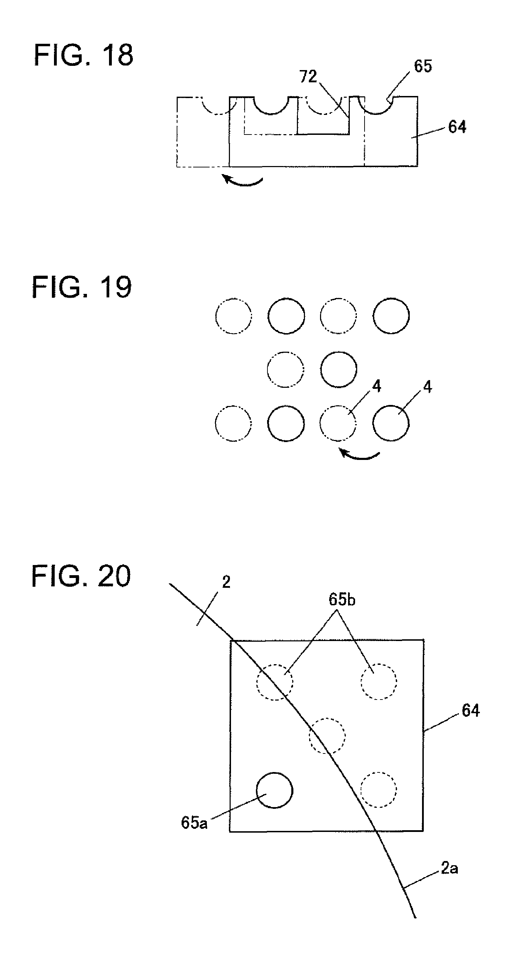

In this case, in the alignment step S4 of each cycle, the glass substrate 2 is aligned such that the convex lens portions 4 having been molded and the depressed portion 72 of the molding die 64 are faced to each other and the cavities 65 of the molding die 64 is faced to the space between the convex lens portions 4 having been formed. As shown in Fig.18, the glass substrate 2 is aligned in such a manner that the molding die 64 is relatively moved one by one in increment of the cavity 65. As a result, as shown in Fig. 19, the convex lens portions 4 are sequentially formed, sequentially filling the spaces between the convex lens portions 4 having been molded.

In addition, in the above description, the case that the depressed portions 72 of the molding die 64 are formed in every other lens portion is described, but the depressed portions 72 have only to be arranged in a thinned manner such that the relation p/s ≥ 2 is satisfied, where the pitch (that is the pitch of the cavity 65) of the depressed portion 72 is p mm and the traveling pitch of the molding die 64 is s mm.

In addition, there is a molding die 64 illustrated in Fig.19 in which a plurality of cavities 65 are two-dimensionally provided in two directions of the traveling direction and the direction perpendicular to the traveling direction, but the molding die 64 have the cavities 65 arranged only in a line in the traveling direction.

In addition, a water-repellent treatment is processed on the surface of the molding die 64, and even if the filing amount of resin is slightly too much, the excessive amount of resin is adhered to the surface of the glass substrate 2 and does not fall into the depressed portions 72. When the next convex lens portions 4 are formed between the convex lens portions 4 having been molded, the excessive amount of resin does not fall into the depressed portions 72 due to the non-lens portion 6 functioning as a wall.

Then, after a predetermined number of convex lens portions 4 are formed on the glass substrate 2, the air slide guide mechanisms 120,130,230,240, and 320 are operated to move the XY stage 30 and the Z stage 304 to a predetermined position, and finally the lid portion 42 is removed from the XY stage 30 to pickup the glass substrate 2 (pickup step S8).

According to the above-described present embodiment, the cavities 65 of the molding die 64 are arranged in a thinned manner to satisfy the relation p/s ≥ 2, and resin is dispensed in the cavities 65 in the dispense step S3; thus the resin can be filled in the cavities 65 in just proportion. In addition, in the alignment step S4, the glass substrate 2 is aligned such that the cavities 65 are faced to the regions between the convex lens portions 4 having been formed; thus the convex lens portions 4 are formed on the glass substrate in a thinned manner, and new convex lens portions 4 will then be formed in the thinned regions. In this case, since the convex lens portions 4 are each formed independently, generation of sink marks can be prevented. As described above, in the resin portion 8, generation of projection portions on the non-lens portion 6 is prevented, and generation of unfilled sections in the convex lens portions 4 is prevented.

In addition, as shown in Fig. 20. if the molding die 64 and the glass substrate 2 are positioned such that they faced to each other on a circumference 2a of the glass substrate 2, resin is dispensed only in the cavities 65a facing inside of the glass substrate 2 and resin is not dispensed in the cavities 65b facing outside of the glass substrate 2 or the circumference 2a, in the dispense step S3.

As shown in Fig. 21, in the case that there is provided on the glass substrate 2 an identifier 2b such as an alignment mark for aligning the glass substrate 2 and a product serial number of the glass substrate 2, the glass substrate 2 is aligned such that the identifier 2b is faced to the depressed portion 72 of the molding die 64, and the convex lens portions 4 are not formed on the identifier 2b, in the alignment step S4.

In this embodiment, a vicinity of the glass substrate 2 is locally in a decompressed statue from the dispense step S3 to the release step S7; however, the wafer lens manufacturing apparatus 10 except the controller 500 may be wholly placed in a closed system such as a chamber, and the wafer lens manufacturing apparatus 10 including the vicinity of the glass substrate 2 may be wholly placed in a decompressed state.

While an example of a method for manufacturing a wafer lens 1 is described in this embodiment, the present embodiment can be also applied to the production of a sub master mold for manufacturing the wafer lens 1. The "sub master mold" is a molding die made of resin and made by using the molding die 64 as a master mold and is basically a glass substrate 2 on which plastic convexo-concave shapes are formed of plastic in the same manner as the convex lens portions 4 are formed on the glass substrate 2.

In the above embodiment, the space portion 400 is decompressed in the imprint step S5 and the exposure step S6; however, the communication holes 3 formed in glass substrate 2 may be eliminated and only the lower space portion 404 may be decompressed.

In this case, as illustrated by the broken line in Fig. 14, it is preferable to open to the atmospheric pressure in at least one of the dispense step S3, the imprint step S5, and the exposure step S6.

When the resin is filled in the dispense step S3 in the decompressed state, bubbles are prevented from being enclosed in the resin; however, a surface tension of the resin may generate bubbles in the resin. To deal with this issue, it can be opened once to the atmospheric pressure after establishing the decompressed state; thus, generation of bubbles can be prevented, thereby preventing unfilled section of resin in the cavities 65.

When both of the upper space portion 402 and the lower space portion 404 are in the decompressed state in the imprint step S5, since there is no pressure difference between the upper space portion 402 and the lower space portion 404, bubbles can be prevented from being enclosed in the resin. However, for example, if the upper space portion 402 is made to be in the atmospheric pressure and the lower space portion 404 is made to be in the decompressed state, the pressure difference between them generates warp and deformation in the glass substrate 2. To deal this issue, the lower space portion 404 can be opened to the atmospheric pressure from the decompressed state; thus, the glass substrate 2 can be kept flat and imprint is performed while it is kept flat

In the case that the resin is exposed to light in the decompressed state in the exposure step S6, the curing inhibition to the resin by oxygen is prevented and the resin can be surely cured. In addition, opening then to the atmospheric pressure can improve the imprinting performance.

In addition, in the above described embodiment, the example of forming the plastic convex lens portions 4 by using the molding die 64 is described; however, the above described embodiment can be applied to the case of forming a plastic molding die (sub master mold) by using the molding die 64 as a master mold (master).

### DESCRIPTION OF THE NUMERALS

1: Wafer lens
2: Glass substrate
2a: Circumference
2b: Identifier
3: Communication hole
4: Convex lens portion
6: Non-lens portion
8: Resin portion
10: Wafer lens manufacturing apparatus
20: Surface plate
30: XY stage
31: Elongated projection
32: Dispenser
33: Needle portion
34: Laser end-measuring device
36: Microscope
38: Communication hole
40: Through-hole
42: Lid portion
44: Light source
50: Molding die portion
52: First support platform
54: Piezoelectric actuator
56: Second support platform
58: Pressure sensor
60: Third support platform
62: θ-stage
64: Molding die
65: Cavity
66: Screw
68: Leaf spring
70: Screw
72: Depressed portion
100: X-axis movement mechanism
102: X-axis guide
110: Linear motor
112: Stator
114: Rotor
116: Scale
118: Sensor
120: Air slide guide mechanism
122: Blowhole
130: Air slide guide mechanism
132,136: Blowhole
134: Vacuum hole
200: Y-axis movement mechanism
202: Y-axis guide 202
204, 206: End portion
210: Y-axis movable body
212, 214: Hook portion
220: Linear motor
222: Stator
224: Rotor
226: Scale
230: Air slide guide mechanism
232,234,236: Blowhole
240: Air slide guide mechanism
242,244,246: Blowhole
300: Z-axis movement mechanism
302: Z-axis guide
304: Z stage
306: Motor
308: Shaft
310: Gap
320: Air slide guide mechanism
322, 324, 326, and 328: Blowhole
330: Sealing member
400: Space portion
402: Upper space portion
404: Lower space portion
406: Space portion
410: Decompression mechanism
500: Controller
600: Molding die
602: Cavity
610: Glass substrate
612: Lens portion
614: Projection portion
616: Unfilled section

## Claims

1. An apparatus for manufacturing a wafer lens in which plastic lens portions are formed on a glass substrate, the apparatus comprising:
a stage configured to move two-dimensionally while holding the glass substrate;
a molding die having a plurality of cavities;
a moving mechanism configured to move the stage upward and downward toward the glass substrate held on the stage; and
a controller configured to control the stage and the moving mechanism,
wherein lenses are formed by the following steps:
performing the following four steps as one cycle at a first position, of the molding die, on the glass substrate:
dispensing resin in the plurality of cavities of the molding die or on the glass substrate;
pressing one of the molding die and the glass substrate against the other,
curing the resin; and
releasing the molding die from the cured resin, and
moving, after the step of releasing, one of the glass substrate and the molding die with respect to the other, and
performing the cycle at a second position,
wherein the relation p/s ≥ 2 is satisfied, where a cavity pitch of the cavities of the molding die in a traveling direction of the molding die is p mm, and a traveling pitch from the first position to the second position is s mm.

2. A molding die comprising:
molding portions configured to form on a glass substrate, plastic lens portions or plastic negative shapes of lens portion;
wherein at a first position on the glass substrate the lens portions or the negative shapes oflens portion are formed by the molding portions, and then at a second position on the glass substrate the molding die is used to form the lens portions or the negative shapes of lens portion,
wherein the molding portions are formed at a pitch which satisfies the relation p/s ≥ 2, where the pitch between the molding portions of the molding die is p mm and a pitch between the first position and the second position is s mm.

3. A method for manufacturing a wafer lens, the method comprising:
a dispense step for dispensing resin on a molding die in which a plurality of cavities are provided in a thinned state;
an alignment step for adjusting a position between the molding die and a glass substrate;
an imprint step for pressing one of the molding die and the glass substrate against the other,
a curing step for curing the resin; and
a release step for releasing the glass substrate from the molding die,
wherein the process from the dispense step to the release step is repeated as one cycle to sequentially form plastic lens portions on the glass substrate, and in the alignment step in each cycle the cavities of the molding die are placed between the lens portions having been formed.
